# EUROPEAN PATENT SPECIFICATION

(11) **EP 0 745 627 B1**
(45) Date of publication and mention of the grant of the patent: **09.06.2004**
(21) Application number: 96303832.8
(22) Date of filing: 29.05.1996
(51) Int. Cl.: C08G 18/50, C08G 18/79

(54) **A process for preparing open-cellular polyurethane modified polyisocyanurate foam**
Verfahren zur Herstellung eines offenzelligen, polyurethanmodifizierten Polyisocyanuratschaumes
Procédé pour la préparation de mousse de polyisocyanurate modifié par polyuréthane ayant des pores ouverts

(30) Priority: 29.05.1995 JP 13073595
(43) Date of publication of application: 04.12.1996
(73) Proprietor: Dow Global Technologies Inc., Midland, Michigan 48674 (US)
(72) Inventor: Matsuo, Kouichi, Machida-shi, Tokyo 194 (JP); Ohkubo, Shoichi, Yokohama-shi, Kanagawa 226 (JP); Yamaguchi, Shigeru, Hatano-shi, Kanagawa 257 (JP); Katano, Hiroaki, Yokohama-shi, Kanagawa 226 (JP)
(74) Representative: Raynor, John

(56) References cited:
- GB-A- 2 109 803
- US-A- 4 452 924
- US-A- 4 546 122

## Description

The present invention relates to a process for preparing opencellular polyurethane modified polyisocyanurate foam having excellent dimensional stability together with good workability and processability.

In general, polyurethane modified polyisocyanurate foams are obtained by reacting an organic polyisocyanate with a polyol or polyol mixture in the presence of a catalyst, and a blowing agent, and generally other optional additives such as surfactants and the like. Since the molecules of the foam obtained have isocyanurate bonding in the molecule, the foam generally has better modulus and flame resistance properties than polyurethane foam. Therefore, such polyisocyanurate foams are widely utilized, for example, as heat insulation, structural material and filling material etc. for refrigerators, cold insulating stockrooms, heat insulating stockrooms, interior and exterior materials for construction, heat insulating pipes, heat insulating tanks and bathtubs etc. When such polyurethane modified polyisocyanurate foam is prepared, a blowing agent is generally added to a raw material to adjust the degree of foaming and foam density. In the prior art, various freons such as chlorofluorocarbon 11 (CFC- 11), hydrochlorofluorocarbon 123 (HCFC- 123) and hydrochlorofluorocarbon 141b (HCFC-141b) have been used as a blowing agent. However recent research has been focused on how to eliminate the use of such freons.

It is well-known that carbon dioxide obtained from the reaction of an isocyanate with water added into a polyol material may be used as a blowing agent. The use of carbon dioxide results in less use or no use of freons. However, the use of large amounts of water to reduce the foam density (apparent density) of polyurethane modified polyisocyanurate foam results in forming many urea bondings in the polyurethane resin due to the reaction of isocyanate with water. As a result, the resin obtained is brittle. On the other hand, in such carbon dioxide blown polyurethane modified polyisocyanurate foam, the foam cells are under reduced pressure because the diffusion speed of carbon dioxide from the foam cells is faster than the diffusion speed of air into the foam cells. As a result, shrinkage or deformation often occurs in the foam. This kind of shrinkage or deformation often appears within several hours or days after the foam has been prepared. Such shrinkage or deformation in the polyurethane modified polyisocyanurate using water as a blowing agent is a critical technical problem in the industry.

Various solutions to this shrinkage problem have been proposed which involve forming open-cellular foam. For example, Japanese Kokai Publication No. H06-16859 discloses a process for preparing open-cellular polyurethane modified polyisocyanurate foam using a hydrocarbon and a chlorinated hydrocarbon, having a boiling point of less than 100° C, as blowing agent. However, hydrocarbons are dangerous in industrial use due to their high flammability and chlorinated hydrocarbons represent an environmental hazard. Japanese Kokoku Publication No. H06-62797 discloses a process for preparing open-cellular polyurethane modified polyisocyanurate foam using a polymer polyol obtained polymerizing ethylenic unsaturated monomer(s) in the presence of a polyol. The polymer polyol is obtained by the addition polymerization of an ethylenically unsaturated monomer which is chemically unstable. Therefore, the use of such ethylenically unsaturated monomer needs much troublesome control regarding raw materials, production processes, etc. In addition, the introduction of ethylenic polymer into the foam often damages the flame resistance which is one of the most important characteristics of polyurethane modified polyisocyanurate foam.

US Patent 5,250,579 and US Patent 5,312,846 disclose a method for forming open-cellular foam physically by adding a fine component which is insoluble in both polyol and isocyanate and has a surface free energy of less than 23 mJ/m². However, the polyurethane material containing the fine component is heterogeneous and often has difficulties in handling and storage. It is suggested that the fine component is injected as a third component when the isocyanate is mixed with the polyol. However, this method requires difficult production control and improvements in production equipment.

There exists no process for preparing open-cellular polyurethane modified polyisocyanurate foam having excellent dimensional stability using water as a primary blowing agent, compared to prior foams prepared using freons as a blowing agent, without extensive modification of the production equipment used in the prior arts, and without sacrificing the flame resistance of the foam.

The purpose of the present invention is to provide a new process for preparing open-cellular polyurethane modified polyisocyanurate foam having excellent dimensional stability and good workability and processability using available production equipment.

The present invention relates to a process for preparing open-cellular polyurethane modified polyisocyanurate foam by reacting a polyol mixture (A) with an organic polyisocyanate (B) in the presence of a catalyst and a blowing agent,
wherein the polyol mixture (A) contains 80-100 weight percent of a OH-terminated reaction product (c), prepared by the reaction of
(a) an organic polyisocyanate having an average functionality of 1.6-2.9 with
(b) a polyether polyol having an average functionality of 2.0-6.0, a number average molecular weight of 700-6,000 and an oxyethylene unit content of less than 10 wt%, OH/NCO ratio of from 1.3 to 10.0,
and wherein the organic polyisocyanate (B) is an organic polyisocyanate having an average functionality of 2.0 to 2.8.

The present invention also relates to a process for preparing open-cellular polyurethane modified polyisocyanurate foam wherein the blowing agent comprises 3-20 parts by weight (pbw) water based on 100 pbw of the polyol mixture (A), and to a process wherein the NCO index (the ratio of the NCO equivalent of the organic polyisocyanate (B) with the OH equivalent of the polyol component (C) containing the polyol mixture (A), catalyst and blowing agent) is 1.5-6.0.

The organic polyisocyanate (a),having an average functionality of 1.6-2.9, to be employed in the present invention may be, for example, polymethylenepolyphenyl polyisocyanate, 4,4'-diphenylmethane diisocyanate, 2,4'-diphenylmethane diisocyanate, 2,2'-diphenylmethane diisocyanate, 2,4-tolylene diisocyanate, 2,6-tolylene diisocyanate, p-phenylene diisocyanate, m-xylene diisocyanate, 1,5-naphtylene diisocyanate, 3,3'-dimethyl-4,4'-biphenylene diisocyanate, iso-phoron diisocyanate, 1,6-hexamethylene diisocyanate, carbodiimide-modified polyisocyanates thereof, NCO-terminated compounds prepared reacting with an isocyanate-reactive hydrogen-containing compound. The organic polyisocyanate may be a single compound or may be a mixture of at least two selected therefrom so that the average functionality is from 1.6-2.9. Organic polyisocyanates having an average functionality of more than 2.0 include, for example, adducts obtained from the reaction of polymethylenepolyphenyl polyisocyanate or other diisocyanate with a multi-functional alcohol such as trimethylol propane, glycerol, etc., and can be used together with ordinary diisocyanate so that the average functionality becomes 1.6-2.9, by way of controlling the reaction on a case-by-case basis. If the average functionality of the organic polyisocyanate (a) is less than 1.6, even though it has reacted with the polyether polyol (b), a reaction product effective for preparing open-cellular polyurethane modified polyisocyanurate foam with excellent dimensional stability can not be obtained. If the average functionality of the organic polyisocyanate (a) is over 2.9, the viscosity of the reaction product becomes unacceptably high, and as a result, the workability decreases. The average functionality of the organic polyisocyanate (a) in the present invention is defined as the average number of NCO groups per molecule. If two or more different organic polyisocyanates are used, the average functionality means the number average thereof.

The polyether polyol (b), to be employed in the present invention, having an average functionality of 2.0-6.0, an average molecular weight of 700 to 6,000 and an oxyethylene unit content of less than 10 weight percent may be, for example, a polyether polyol prepared reacting a multi-functional alcohol, a hydroxy group-containing amine compound or a multi-functional amino compound, etc., having an average functionality of 2.0-8.0, with alkylene oxide such as ethylene oxide, propylene oxide, etc., so that the oxyethylene unit content becomes less than 10 weight percents. The polyether polyol (b) may be a single compound or a mixture. The average functionality of the polyether polyol (b) in the present invention is defined as the average number of functional groups, able to react with an NCO group, per molecule. The functional group includes, for example, hydroxy group, active hydrogen-containing substituent such as amino group, etc. The multi-functional alcohol having an average functionality of 2.0 to 8.0 includes, for example, glycerol, propylene glycol, dipropylene glycol, trimethylol propane, pentaerythritol, methyl glucoside, sorbitol, mannitol, sucrose, etc. The hydroxy group-containing amine compound includes, for example, mono-ethanolamine, di-ethanolamine, triethanolamine, etc. The multifunctional amino compound includes, for example, ethylenediamine, tolilenediamine, diethylenetriamine, etc. If the average molecular weight of the polyether polyol (b) is less than 700, even though it has reacted with the organic polyisocyanate (a), a reaction product effective for preparing open-cellular polyurethane modified polyisocyanurate foam having excellent dimensional stability can not be obtained. In case that the oxyethylene unit content is over 10 weight percents, an effective reaction product can not also be obtained. If the average molecular weight and oxyethylene unit content of the polyol is over 6,000 and less than 10 weight percent respectively, there is a potential problem in the production.

The OH-terminated reaction product (c) is prepared by reacting the said organic polyisocyanate (a) with the polyether polyol (b) at the range of 1.3 to 10.0, preferably 1.5 to 6.0, OH group equivalent of (b) per NCO group equivalent of (a). If the OH group equivalent of (b) is less than 1.0, an OH-terminated reaction product can not be obtained. If the OH group equivalent of (b) is more than 1.0 and less than 1.3, the viscosity of the reaction product becomes high due to the high degree of polymerization and there is a potential problem in its operation. If the OH group equivalent of (b) is over 10.0, the purpose of the present invention can not be achieved. A plasticizer, surfactant, flame retardant, pigment or catalyst, etc. may optionally be employed.

The polyol mixture (A) comprises 80-100 wt% OH-terminated reaction product (c). If the OH-terminated reaction product (c) is less than 80 wt%, the foam obtained has good dimensional stability but no open-cellular structure. The polyol mixture (A) may contain any polyether polyol, polyester polyol or active hydrogen-containing compound in the range of not exceeding 20 wt%. The active hydrogen-containing compound may be, for example, glycerol, polypropylene glycol, 1,2-butane diol, 1,4-butane diol, poly (tetramethylene) ether glycol, diethanolamine, tolylenediamine. ethylenediamine, etc. These components are optionally employed to improve foam strength or compatibility between polyol mixture and catalyst, blowing agent or surfactant, etc.

The organic polyisocyanate (B) having an average functionality of 2.0-2.8 includes, for example, polymethylene-polyphenyl polyisocyanate, 4,4'diphenylmethane diisocyanate, 2,4'-diphenylmethane diisocyanate, 2,2'diphenylmethane diisocyanate, 2,4-tolyene diisocyanate, 2,6-tolylene diisocyanate, p-phenylene diisocyanate, m-xylene diisocyanate, 1,5-naphtylene diisocyanate, 3,3'-dimethyl-4,4'-biphenylene diisocyanate, iso-phoron diisocyanate, 1,6-hexamethylene diisocyanate; carbodiimide-modified polyisocyanates thereof, isocyanate group-terminated compounds prepared reacting with isocyanate-reactive hydrogen-containing compound, or a mixture thereof. The organic polyisocyanate having an average functionality of over 2.0 includes, for example, adducts obtained from the reaction of polymethylenepolyphenyl polyisocyanate or other diisocyanate with a multi-functional alcohol such as trimethylol propane, glycerol, etc. This organic polyisocyanate can be employed together with ordinary diisocyanates so that the average functionality becomes 2.0-2.8, by way of controlling the reaction on a case-by-case basis.

In the present invention, a well-known urethane or trimerization catalyst, such as amine catalysts, organic metal catalysts such as tin- or lead-type catalysts or alkali metal salts of organic acids, is optionally but preferably employed in the reaction of the polyol mixture (A) with the organic polyisocyanate (B). The amine catalyst includes, for example, pentamethyl diethylenetriamine, hexamethylene diamine, tetramethyl hexamethylene diamine, etc. The organic metal catalyst includes, for example, dibutyltin dilaurate, stannous octoate, etc. The alkali metal salt of organic acid includes, for example, potassium acetate, etc.

The preferable blowing agent to be employed in the present invention is water. The preferable amount of water is 3-12 pbw based on 100 pbw of the polyol mixture (A). The foam density of the finished foam product can be adjusted by varying the amount of water. Hydrochlorofluorocarbons such as 1,1-dichloro-1-fluoroethane, hydrofluorocarbons such as 1,1,1,2-tetrafluoroethane or low boiling point liquids such as pentane, hexane, etc. May optionally be employed together with water. Surfactants such as organosiloxane copolymer, or additives such as flame retardants, pigments, etc., may also optionally be employed in the present invention.

In the present invention, the NCO index, is 1.5-6.0, preferably 1.5-5.0. If the NCO index is less than 1.5, the polyisocyanurate foam obtained has poor flame resistance and modulus because the isocyanurate bondings are not fully formed in the foam body. On the other hand, if the NCO index is over 6.0, the foam obtained is brittle and the foam having open-cellular structure can not fully be obtained because the OH-terminated reaction product content becomes less.

### EXAMPLES

The present invention is described more specifically in the following Examples and Comparative Examples. It is to be understood, however, that the invention is not to be limited by the embodiments described in the following Examples. Reactive components employed in Examples and Comparative Examples are as follows. The term "%" means percent by weight (pbw) unless otherwise specified.

### 1. Preparation of OH-terminated Reaction Product (C):

The OH-terminated reaction products (c) were prepared employing the following organic polyisocyanates (a1) - (a2) and polyether polyols (b1) - (b6), (b-A) and (b-B). The polyether polyols (b-A) and (b-B) are not in accordance with the present invention.
- Isocyanate (a1): a mixture of 2,4-tolylene diisocyanate and 2,6-tolylene diisocyanate (mixing ratio: 2,4-/2,6-= 80/20; average functionality: 2.0; NCO content: 48.2%)
- Isocyanate (a2): a mixture of 2,4'-diphenylmethane diisocyanate and 4,4'diphenylmethane diisocyanate (mixing ratio: 2,4'-/4,4'-=2/98; average functionality: 2.8; NCO content: 31.0%)
- Polyol (b1): a polyether polyol prepared from the addition reaction of glycerol with propyleneoxide (number average molecular weight: 3,000; OH value: 56mgKOH/g; average functionality: 3.0)
- Polyol (b2): a polyether polyol prepared from the addition reaction of propyleneglycol with propyleneoxide (number average molecular weight: 3.000; OH value: 37mgKOH/g; average functionality: 3.0)
- Polyol (b3): a polyether polyol prepared from the addition reaction of propyleneglycol with propyleneoxide (number average molecular weight: 1,000; OH value: 112mgKOH/g; average functionality: 2.0)
- Polyol (b4): a polyether polyol prepared from the addition reaction of pentaerythritol with propyleneoxide (number average molecular weight: 900; OH value: 250mgKOH/g; average functionality: 4.0)
- Polyol (b5): a polyether polyol prepared from the addition reaction of erythritol with propyleneoxide (number average molecular weight: 3,570., OH value: 63mgKOH/g; average functionality: 4.0)
- Polyol (b6): a polyether polyol prepared from the addition reaction of sorbitol with propyleneoxide (number average molecular weight: 1,530; OH value: 220mgKOH/g; average functionality: 6.0)
- Polyol (b-A): a polyether polyol prepared from the addition reaction of glycerol with propyleneoxide (number average molecular weight: 600; OH value: 280mgKOH/g)
- Polyol (bB): a polyether polyol prepared from the addition reaction of glycerol with propyleneoxide and ethyleneoxide (number average molecular weight: 4,800; OH value: 34mgKOH/g; oxyethylene unit content: 16%)

### Production Example 1:

600 pbw Polyol (b1) (kept at 40° C) was mixed with 17.4 pbw Isocyanate (a1) (kept at 40° C) with stirring, and the mixture was stirred for 8 hours at 40° C under nitrogen atmosphere and then it was heated to 70° C and further it was stirred for 44 hours. After that, the reaction product was taken out and the viscosity was measured at 25° C. Then, the reaction product was poured into a vessel and was kept for 48 hours at 70° C under nitrogen atmosphere, and the viscosity was measured at 25 degrees C again. The viscosity of the reaction product was 3,340 cps at 25° C in both measurements. This reaction product was named as "(c1)". The reaction product (c1) was homogeneous and clear liquid and no change was found after keeping it for 3 months at room temperature.

### Production Examples 2-7:

The reaction products, (c2) to (c7), were prepared in a same manner as stated in Production Example 1.

Production Examples 1-7 were shown in Table 1. Reaction products, (c-A) and (c-B), were prepared in a same manner as stated in Production Example 1, employing Polyols (b-A) and (b-B) which are not in accordance with the present invention. These comparative examples were named as Production Examples A and B and are shown in Table 2.

### 2.Preparation of Polyurethane modified Polyisocyanurate Foams:

A polyol component was prepared mixing a reaction product (cl -c7) with water, catalyst, surfactant and flame retardant according to Table 3. Nine examples for polyurethane modified polyisocyanurate foam are shown in Table 3 as "Examples 1-9" corresponding to reaction product (c1)-(c7). The additives employed are as follows.
Catalyst A: tetramethyl hexamethylene diamine (product name: Kaollzer No. 1)
Catalyst B: pentamethyl diethylene triamine (product name: Kaollzer No.3)
Catalyst C: diethyleneglycol solution of 20% potassium acetate
Surfactant:B-8017 (produced by Goldschmit Corp.)
Flame retardant: tris-chloropropyl phosphate

A polyol component and a polymethylenepolyphenyl polyisocyanate (polymeric MDI: PAPI- 135 (NCO content: 31.1 %; produced by Dow Mitsubishi Chemical Ltd.), both of which were kept at 20 degrees C respectively, were mixed and the mixture was immediately mixed with a stirrer for five seconds at 3,000 r.p.m. The mixture was poured into a wooden mould lined with a polyethylene sheet to form a free foam. The formulation (pbw) of the polyol components, amount of polymethylenepolyphenyl polyisocyanate, NCO/OH equivalent ratio, reactivity and core density of the foams obtained are shown in Tables 3. Various polyol components were, in a same manner, prepared employing the reaction products (c-A) and (c-B) and polyols (b1) and (b4). Various free foams were obtained employing these polyol components in a same manner as Examples 1-9. The results are shown as Comparative Examples A to D in Table 4.

In Table 3 and 4, the term "cream time" means the time in seconds from mixing to foaming of a reaction liquid. The term "gel time" means the time in seconds from mixing of a reaction liquid to the appearance of gooey threads of foam which stick to a wire. Core density (in kg/m³) was measured according to ASTM-D-1622 employing a cube of about 10 cm unit length from the center portion of the foam.

For various foams prepared from Examples 1 to 9 and Comparative Examples A to D, (1) "dimensional stability" and (2) "proportion of closed cells in the foam" were measured as follows, and the results are shown in Table 5.
(1) For dimensional stability, a test sample was cut as a 10 cm cube from the center portion of the foam and the dimensional change rates of both foaming and vertical directions were measured after the sample was kept for one day and one week at room temperature and for one week at 70° C. A positive value indicates expansion and a negative one shrinkage.
(2) Proportion of closed cells in the foam was measured according to ASTM-D-2856.

As shown in Table 5, the foams obtained from Examples 1-9 had substantially open-cellular structure and showed almost no shrinkage, deformation and dimensional change under varying environmental conditions after production. On the other hand. the foams obtained from Comparative Examples A-D had substantially closed cell structure and showed shrinkage within several days after production. As described above, the opencellular polyurethane modified polyisocyanurate foams obtained according to the present invention showed almost no shrinkage and excellent dimensional stability, even though water was employed as blowing agent as shown in Examples.

As described above, according to the present invention, it is possible to prepare open-cellular polyurethane modified polyisocyanurate foam having excellent dimensional stability, and good workability and processability, by employing water as blowing agent and by employing prior production equipment. The foams obtained according to the present invention are suitable for interior and exterior materials for construction because the foam has excellent dimensional stability under various environmental conditions (e.g. temperature, humidity, etc.), good impact resistance and compression deformation resistance. Besides, open-cellular rich polyurethane modified polyisocyanurate foam having a proportion of closed cells of less than 10% can be prepared according to the present invention. The present invention is also useful for the production of laminate boards, sizing panels, etc. without employing, as blowing agent, chlorofluorocarbons or hydrofluorocarbons, which are considered to be harmful to the environment, or flammable hydrocarbons. Further, it is possible to produce vacuum insulators by incorporating foam obtained according to the present invention into a gas-impermeable bag and then subjecting it to reduced pressure. The foam of the present invention is thus also useful as a core material for a vacuum insulator because of its open-cellular structure.

**Table 1 :**

| Preparation of OH-terminated Reaction Product (Examples 1-7) | | | | | | | |
|---|---|---|---|---|---|---|---|
| EX. No. | 1 | 2 | 3 | 4 | 5 | 6 | 7 |
| polyol (b1) | 600 | | | | | | 300 |
| polyol (b2) | | 600 | 300 | 240 | 150 | 300 | |
| polyol (b3) | | | 100 | | | | |
| polyol (b4) | | | | 71.8 | | | |
| polyol (b5) | | | | | 178.7 | | |
| polyol (b6) | | | | | | 76.5 | |
| isocyanate (a1) | 17.4 | 17.4 | 17.4 | 13.9 | 8.7 | 17.4 | |
| isocyanate (a2) | | | | | | | 12.5 |
| equivalent | 3.0 | 2.0 | 2.0 | 3.0 | 3.0 | 5.0 | 3.0 |
| ratio | | | | | | | |
| viscosity | 3380 | 4000 | 4400 | 4000 | 2710 | 12750 | 4980 |
| reaction prod. | c 1 | c2 | c3 | c4 | c5 | c6 | c7 |

**Table 2 :**

| Preparation of OH-terminated Reaction Product (Comparative Examples A and B) | | |
|---|---|---|
| | A | B |
| polyol (b-A) | 300 | |
| polyol (b-B) | | 240 |
| isocyanate (a1) | 43.6 | 4.4 |
| equivalent | 3.0 | 3.0 |
| ratio viscosity | 47800 | 8200 |
| reaction prod. | c-A | c-B |

**Table 3 :**

| Preparation of Polyurethane modified Polyisocyanurate Foam (Examples 1 - 9) | | | | | | | | | |
|---|---|---|---|---|---|---|---|---|---|
| EX. No. | 1 | 2 | 3 | 4 | 5 | 6 | 7 | 8 | 9 |
| Polyol Side reaction prod. | | | | | | | | | |
| (c1) | 100 | 100 | | | | | | | |
| (c2) | | | 100 | 100 | | | | | |
| (c3) | | | | | 100 | | | | |
| (c4) | | | | | | 100 | | | |
| (c5) | | | | | | | 100 | | |
| (c6) | | | | | | | | 100 | |
| (c7) | | | | | | | | | 100 |
| water | 8.0 | 8.0 | 8.0 | 10.0 | 8.0 | 8.0 | 8.0 | 8.0 | 8.0 |
| catalyst A | 0.6 | 1.0 | 0.8 | 0.8 | 0.8 | 0.8 | 0.8 | 0.8 | 0.8 |
| catalyst B | 0.4 | 1.0 | 0.8 | 0.8 | 0.8 | 0.8 | 0.8 | 0.8 | 0.8 |
| surfactant | 1.5 | 1.5 | 1.5 | 1.5 | 1.5 | 1.5 | 1.5 | 1.5 | 1.5 |
| flam.retardant | | 30 | 50 | 60 | 30 | 30 | 30 | 30 | 30 |
| Iso-Side | | | | | | | | | |
| PAPI-135 | 239 | 351 | 388 | 556 | 393 | 279 | 397 | 274 | 318 |
| Reactivity | | | | | | | | | 8 |
| Cream Time | 16 | 10 | 11 | 11 | 11 | 8 | 9 | 8 | |
| Gel Time | 60 | 34 | 40 | 44 | 42 | 27 | 37 | 25 | 29 |
| Core Density | 28.1 | 37.5 | 39.2 | 43.0 | 39.8 | 31.5 | 38.8 | 31.2 | 33.9 |

**Table 4 :**

| Preparation of Rigid Polyurethane Foam (Comparative Examples A-D) | | | | |
|---|---|---|---|---|
| EX. No. | A | B | C | D |
| Polyol Side reaction prod. | 100 | | | |
| (c-A) | | | | |
| (c-B) | | 100 | | |
| polyol | | | | |
| (b1) | | | 100 | |
| (b4) | | | | 100 |
| water | 8.0 | 8.0 | 8.0 | 8.0 |
| catalyst A | 0.8 | 0.8 | 1.0 | 0.8 |
| catalyst B | 0.8 | 0.8 | 1.0 | 0.8 |
| surfactant | 1.5 | 1.5 | 1.5 | 1.5 |
| flam.retardant | 30 | 30 | 20 | 30 |
| Iso-Side | | | | |
| PAPI-135 | 379 | 312 | 361 | 442 |
| Reactivity | | | | |
| Cream Time | 8 | 7 | 10 | 11 |
| Gel Time | 26 | 20 | 37 | 34 |
| Core Density | 29.3 | 28.5 | 32.6 | 28.5 |

**Table 5 :**

| Properties of Polyurethane modified Polyisocyanurate Foam (Examples 1-9 and Comparative Examples A-D) | | | | | |
|---|---|---|---|---|---|
| EX. No. | core density | dimensional change (%) | | | closed cells (%) |
| | | RT 1 day | RT 1 week | 70C 1 week | |
| 1 | 28.1 | 0 | -0.1 | 0 | 5 |
| 2 | 37.5 | 0 | 0 | 0 | 7 |
| 3 | 39.2 | 0 | -0.3 | +0.4 | 5 |
| 4 | 43.0 | 0 | -0.1 | +0.1 | 6 |
| 5 | 39.8 | 0 | 0 | 0 | 5 |
| 6 | 31.5 | 0 | +0.1 | +0.4 | 8 |
| 7 | 38.8 | 0 | 0 | 0 | 4 |
| 8 | 31.2 | 0 | 0 | +0.2 | 4 |
| 9 | 33.9 | 0 | -0.2 | 0 | 4 |
| A | 29.3 | -20 | -35 | -31 | 89 |
| B | 28.5 | -18 | -30 | -23 | 96 |
| C | 32.6 | -26 | -42 | -38 | 92 |
| D | 28.5 | -21 | -29 | -23 | 96 |

## Claims

1. A process for preparing an open-cellular polyurethane modified polyisocyanurate foam by reacting
a polyol mixture (A) with
an organic polyisocyanate (B) in the presence of a catalyst and a blowing agent,
wherein the polyol mixture (A) contains from 80 to 100 weight percent of a OH-terminated reaction product (c), prepared by the reaction of
(a) an organic polyisocyanate having an average functionality of 1.6 to 2.9 with
(b) a polyether polyol having an average functionality of 2.0-6.0, a number average molecular weight of 700 to 6,000 and an oxyethylene unit content of less than 10 wt%, at an OH/NCO ratio of from 1.3 to 10.0,
and wherein the organic polyisocyanate (B) is an organic polyisocyanate having an average functionality of from 2.0 to 2.8.

2. The process of Claim 1 , wherein the blowing agent comprises from 3 to 20 parts by weight water based on 100 parts by weight of the polyol mixture (A).

3. A process as claimed in any one of the preceding Claims, wherein the NCO index is from 1.5 to 6.0.

4. An open-cellular polyurethane modified polyisocyanurate foam obtained by reacting
a polyol mixture (A) with
an organic polyisocyanate (B) in the presence of a catalyst and a blowing agent,
wherein the polyol mixture (A) contains from 80 to 100 weight percent of a OH-terminated reaction product (c), prepared by the reaction of
(a) an organic polyisocyanate having an average functionality of 1.6 to 2.9 with
(b) a polyether polyol having an average functionality of 2.0-6.0, a number average molecular weight of 700 to 6,000 and an oxyethylene unit content of less than 10 wt%, at an OH/NCO ratio of from 1.3 to 10.0,
and wherein the organic polyisocyanate (B) is an organic polyisocyanate having an average functionality of from 2.0 to 2.8.

5. A foam as claimed in Claim 4 , wherein the blowing agent comprises from 3 to 20 parts by weight water based on 100 parts by weight of the polyol mixture (A).

6. A foam as claimed in any one of Claims 4 or 5, wherein the NCO index is from 1.5 to 6.0.

7. A laminated board, construction panel, or vacuum insulator incorporating a foam as claimed in any one of Claims 4 to 6.

## Patentansprüche

1. Verfahren zur Herstellung eines offenzelligen polyurethanmodifizierten Polyisocyanuratschaumes durch Umsetzen:
einer Polyolmischung (A) mit
einem organischen Polyisocyanat (B) in Anwesenheit eines Katalysators und eines Blähmittels,
bei welchem die Polyolmischung (A) von 80 bis 100 Gew.-% eines OH-terminierten Reaktionsproduktes (c) enthält, das durch die Reaktion hergestellt worden ist von:
(a) einem organischen Polyisocyanat mit einer Durchschnittsfunktionalität von 1,6 bis 2,9 mit
(b) einem Polyetherpolyol mit einer Durchschnittsfunktionalität von 2,6 - 6,0, einem Zahlendurchschnittsmolekulargewicht von 700 bis 6.000 und einem Gehalt an Oxyethyleneinheiten von weniger als 10 Gew.-%, bei einem Verhältnis OH/NCO von 1,3 bis 10,0, und
bei welchem das organische Polyisocyanat (B) ein organisches Polyisocyanat mit einer Durchschnittsfunktionalität von 2,0 bis 2,8 ist.

2. Verfahren nach Anspruch 1, bei welchem das Blähmittel von 3 bis 20 Gew.-Teile Wasser, bezogen auf 100 Gew.-Teile der Polyolmischung (A) umfaßt.

3. Verfahren wie in irgendeinem der vorhergehenden Ansprüche beansprucht, bei welchem der NCO-Index von 1,5 bis 6,0 beträgt.

4. Offenzelliger polyurethanmodifizierter Polyisocyanuratschaum, erhalten durch Umsetzen:
einer Polyolmischung (A) mit
einem organischen Polyisocyanat (B) in Anwesenheit eines Katalysators und eines Blähmittels,
bei welchem die Polyolmischung (A) von 80 bis 100 Gew.-% eines OH-terminierten Reaktionsproduktes (c) enthält, das durch die Reaktion hergestellt worden ist von:
(a) einem organischen Polyisocyanat mit einer Durchschnittsfunktionalität von 1,6 bis 2,9 mit
(b) einem Polyetherpolyol mit einer Durchschnittsfunktionalität von 2,6 - 6,0, einem Zahlendurchschnittsmolekulargewicht von 700 bis 6.000 und einem Gehalt an Oxyethyleneinheiten von weniger als 10 Gew.-%, bei einem Verhältnis OH/NCO von 1,3 bis 10,0, und
bei welchem das organische Polyisocyanat (B) ein organisches Polyisocyanat mit einer Durchschnittsfunktionalität von 2,0 bis 2,8 ist.

5. Schaum wie in Anspruch 4 beansprucht, bei welchem das Blähmittel von 3 bis 20 Gew.-Teile Wasser, bezogen auf 100 Gew.-Teile der Polyolmischung (A) umfaßt.

6. Schaum wie in irgendeinem der vorhergehenden Ansprüche beansprucht, bei welchem der NCO-Index von 1,5 bis 6,0 beträgt.

7. Laminiertes Board, Konstruktionspanel oder Vakuumisolator, der einen Schaum, wie in irgendeinem der Ansprüche 4 bis 6 beansprucht, beinhaltet.

## Revendications

1. Procédé de préparation d'une mousse à cellules ouvertes en polyisocyanurate modifié polyuréthane, par réaction
- d'un mélange de polyols (A)
- avec un polyisocyanate organique (B),
en présence d'un catalyseur et d'un agent d'expansion,
dans lequel procédé le mélange de polyols (A) contient de 80 à 100 % en poids d'un produit de réaction à groupes terminaux hydroxy (c), préparé par réaction
a) d'un polyisocyanate organique dont la fonctionnalité moyenne vaut de 1,6 à 2,9
b) avec un polyéther-polyol dont la fonctionnalité moyenne vaut de 2,0 à 6,0, dont la masse molaire moyenne en nombre vaut de 700 à 6000 et qui contient moins de 10 % en poids de motifs oxyéthylène,
en un rapport OH/NCO de 1,3 à 10,0,
et dans lequel procédé le polyisocyanate organique (B) est un polyisocyanate organique dont la fonctionnalité moyenne vaut de 2,0 à 2,8.

2. Procédé conforme à la revendication 1, dans lequel l'agent d'expansion comprend 3 à 20 parties en poids d'eau pour 100 parties en poids du mélange de polyols (A).

3. Procédé conforme à l'une des revendications précédentes, dans lequel l'indice d'isocyanate vaut de 1,5 à 6,0.

4. Mousse à cellules ouvertes en polyisocyanurate modifié polyuréthane, obtenue par réaction
- d'un mélange de polyols (A)
- avec un polyisocyanate organique (B),
en présence d'un catalyseur et d'un agent d'expansion,
dans laquelle le mélange de polyols (A) contient de 80 à 100 % en poids d'un produit de réaction à groupes terminaux hydroxy (c), préparé par réaction
a) d'un polyisocyanate organique dont la fonctionnalité moyenne vaut de 1,6 à 2,9
b) avec un polyéther-polyol dont la fonctionnalité moyenne vaut de 2,0 à 6,0, dont la masse molaire moyenne en nombre vaut de 700 à 6000 et qui contient moins de 10 % en poids de motifs oxyéthylène,
en un rapport OH/NCO de 1,3 à 10,0,
et dans laquelle le polyisocyanate organique (B) est un polyisocyanate organique dont la fonctionnalité moyenne vaut de 2,0 à 2,8.

5. Mousse conforme à la revendication 4, dans laquelle l'agent d'expansion comprend 3 à 20 parties en poids d'eau pour 100 parties en poids du mélange de polyols (A).

6. Mousse conforme à l'une des revendications 4 et 5, dans laquelle l'indice d'isocyanate vaut de 1,5 à 6,0.

7. Panneau stratifié, panneau de construction ou panneau d'isolation sous vide, dans lequel est incorporée une mousse conforme à l'une des revendications 4 à 6.
